# EUROPEAN PATENT SPECIFICATION

(11) **EP 3 476 706 B1**
(45) Date of publication and mention of the grant of the patent: **28.04.2021**
(21) Application number: 18202984.3
(22) Date of filing: 26.10.2018
(51) Int. Cl.: B62L 1/00, B62J 15/02

(54) **WHEEL-FENDER STRUCTURE FOR A MOTORCYCLE AND METHOD FOR ADJUSTING THE POSITION OF THE FENDER OF THE WHEEL WITH RESPECT TO A TIRE**
RAD-KOTFLÜGEL STRUKTUR FÜR EIN MOTORRAD UND VERFAHREN ZUR EINSTELLUNG DER POSITION DES KOTFLÜGELS IN BEZUG AUF DEN REIFEN
STRUCTURE ROUE-GARDE-BOUE DE MOTOCYCLETTE ET PROCÉDÉ D'AJUSTEMENT DE LA POSITION DU GARDE-BOUE PAR RAPPORT À UN PNEU

(30) Priority: 27.10.2017 IT 201700122834
(43) Date of publication of application: 01.05.2019
(73) Proprietor: YAMAHA MOTOR CO., LTD., Iwata-shi Shizuoka 438-8501 (JP)
(72) Inventor: SAITA, Alessandro, SHIZUOKA, 438-8501 (JP)
(74) Representative: Di Sciuva, Michele

(56) References cited:
- CN-U- 206 031 608
- SU-A1- 499 170
- US-A- 5 026 083

## Description

### TECHNICAL FIELD

The present invention relates to a wheel for a motorcycle.

The present invention also relates to a method for adjusting the position of the fender of the wheel with respect to a tire.

### BACKGROUND ART

Motorcycles are known comprising a body, a front wheel and a rear wheel which are operatively connected to the body.

Motorcycles are also known comprising one rear wheel and two front wheels, or one front wheel and two rear wheel, or two front and two rear wheels.

Furthermore, motorcycle are also known with two front or rear wheels, which are mounted in such a way to be leaning with respect to the body.

In greater detail, each rear/front wheel comprises:
- a hollow hub; and
- a hollow hub; and
- a tire mounted on a circular rim.

Known motorcycles also comprises a fender covering at least part of the front wheel. The fender is aimed to prevent sand, mud, rocks, liquids, and other road spray from being thrown into the air by the rotating tire.

In greater detail, the fender is fixed in a given position to a non-rotating element of the motorcycle, e.g. the suspension system.

Accordingly, the clearance between the tire and the fender is fixed during the life-cycle of the motorcycle.

With special reference to motorcycle designed for both on and off-road use, known also as "dual-sport" motorcycles, the above-identified solution leaves room for improvement.

In greater detail, when the motorcycle is used off-road, a higher first value of clearance is desirable in order to reduce the risk that the mud or the sand catches in between the fender and tire of the front wheel. As a matter of fact, the caught in mud or the sand can exert a braking action on the front wheel, thus generating a risk for the safety of the guide, especially at the end of a jump when the motorbike is approaching the land again.

Conversely, a smaller second value of clearance is desirable when the motorbike is used on-road.

A need is therefore felt within the industry to optimize as far as possible the value of the clearance both in the on-road and in the off-road use, so as to accordingly increase the flexibility of use of the motorcycle.

### DISCLOSURE OF INVENTION

It is an object of the present invention to provide a wheel for a motorcycle, allowing to meet at least one the aforementioned need in a simple and cost-effective manner.

CN-U-206031608 describes a wheel structure according to the preamble of claim 1.

US-A-5026083 discloses a front fender mount for a cycle employing a springer mount suspension system including glide assemblies mounted for sliding movement along components of the suspension system. The glide assemblies are connected by push rods to rocker arms at the wheel axle. Arcuate up and down movement of the wheel is replicated as linear movement of the fender to maintain spacing between the two.

SU-A1-499170 discloses a wheel structure for a motorcycle comprising an adjustable fender.

This object is achieved by a wheel for a motorcycle, as claimed in claim 1.

The present invention also relates to a method of adjusting the position of a fender of a wheel with respect to the tire, as claimed in claim 9.

### BRIEF DESCRIPTION OF THE DRAWINGS

One preferred, non-limiting embodiment of the present invention will be described by way of example with reference to the accompanying drawings, in which:
- Figure 1 is a lateral view of a motorcycle comprising a wheel according to the present invention;
- Figure 2 is enlarged scale front view of the wheel of Figure 1;
- Figure 3 is perspective view in a further enlarged scale of some components of the wheel of Figure 1, with parts remove for clarity; and
- Figure 4 is a further enlarged view of a section taken along line IV-IV of Figure 2.

### BEST MODE FOR CARRYING OUT THE INVENTION

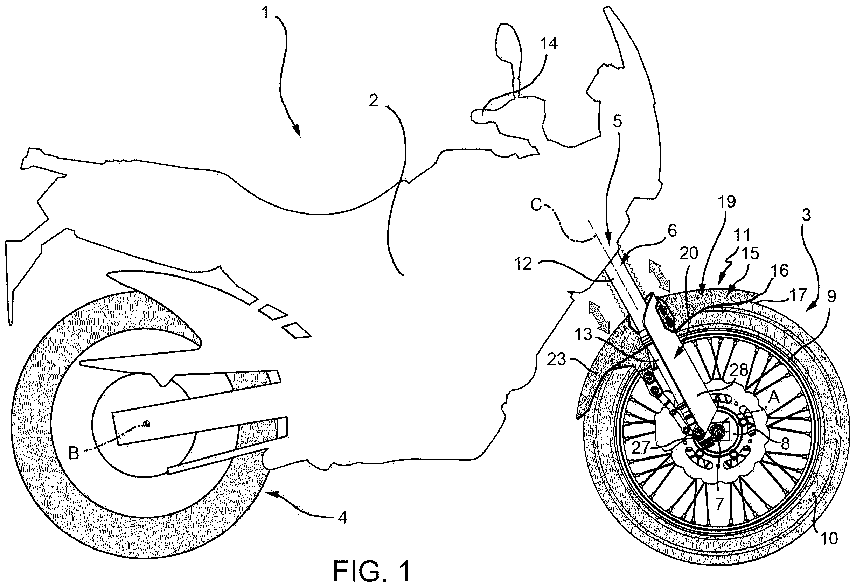

With reference to Figure 1, numeral 1 indicates a motorcycle.

In the following of the present description, expressions like "front", "rear", "top" and "bottom" are used with reference to a normal advancing direction and operative position of motorcycle 1 shown in the attached Figures.

In the embodiment shown, motorcycle 1 is a so-called "dual sport" motorcycle, i.e. a motorcycle which can be driven either off-road or on-road.

Motorcycle 1 substantially comprises:
- a body 2,
- a front wheel 3 and a rear wheel 4;
- a steering mechanism 5 which rotatably supports front wheel 3 and is operatively connected to a not shown handlebar 14 which can be steered with respect to body 2.

Front wheel 3 and rear wheel 4 are rotatable about respective axes A, B.

In the embodiment shown, rear wheel 4 is a driving wheel and front wheel 3 is a driven wheel.

In greater detail, front wheel 3 substantially comprises:
- a stationary structure 11, which is fixed with respect to axis A and is connected to steering mechanism 5;
- a hub 8 rotatable about axis A;
- a circular rim 9 supporting a circular tire 10 and angularly integral with hub 8; and
- a plurality of wire spokes 18 connected at respective opposite radial ends to rim 9 and hub 8.

Stationary structure 11 comprises, in turn,:
- an axle 7 extending about axis A and about which hub 8, rim 9 and tire 10 are rotatably mounted; and
- a pair of forks 6 which are part of steering mechanism 5 and extend along respective axes C parallel to one another and transversal to axis A

In the embodiment shown, forks 6 straddle front wheel 3.

In particular, each fork 6 comprises a stanchion 12 fixed to the handlebar and a slider 13 fixed to front wheel 3.

Each slider 13 is telescopically slidable about relative axis C with respect to corresponding stanchion 12.

Preferably, axle 7 is fixed to sliders 13.

In particular, axle 7 extends on both sides of front wheel 3.

Front wheel 3 also comprises:
- a fender 15, which covers a part of tire 10; and
- connecting means 20 for connecting fender 15 to stationary structure 11;

Connecting means 20 can be selectively set:
- either in a first configuration, at which the distance d between given points of fender 15 and tire 10 assumes a first lower value; or
- in a second configuration, at which the distance d between given points of fender 15 and tire 10 assumes a second greater value.

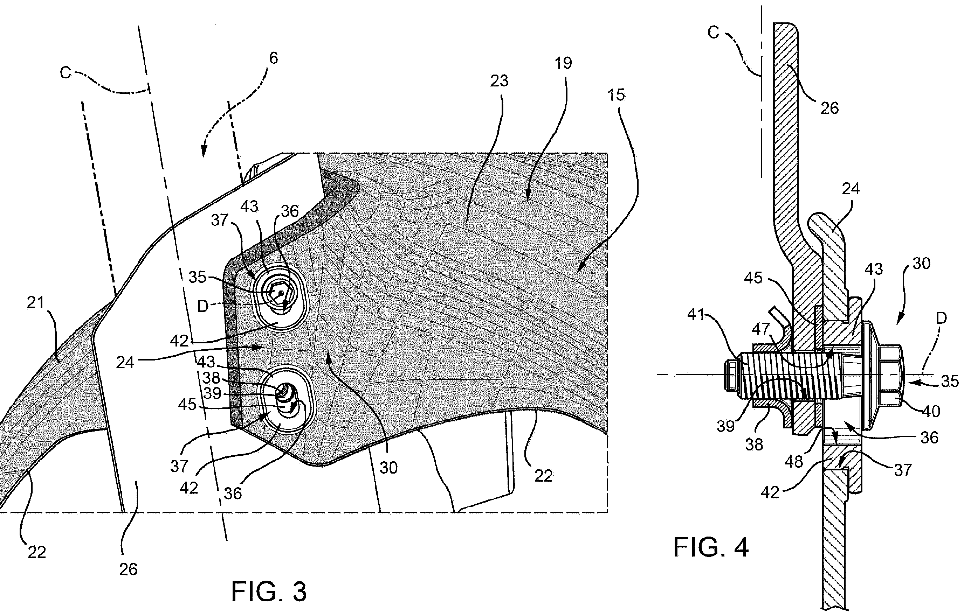

Furthermore, connecting means 20 can be selectively and continuously set in a plurality of intermediate configurations (one of which shown in Figure 4), at which distance d assumes an intermediate value between the first and the second value.

In other words, the distance d can be adjusted by acting on connecting means 20.

In the present description, the expression "given points" is used for indicating a reference point 16 on fender 15 and a reference point 17 on tire 10.

With reference to Figure 3, reference point 16 is the forwardmost point of fender 15 and reference point 17 is the point of radially outer edge of tire 10, which is radially aligned with reference point 16. Distance d is measured radially to axis A.

Fender 15 substantially comprises an arch shaped main portion 19, which surrounds a portion of tire 10 and extends about axis A.

In particular, main portion 19 is bound by a pair of opposite arch-shaped edges 21, 22 arranged on the side of axis A and on the opposite side of axis A. Main portion 19 also comprises a pair of lateral walls 23 extending between edges 21, 22 and substantially orthogonal to axis A.

Furthermore, fender 15 comprises:
- a pair of wings 24, which laterally protrude from one of wall 23 transversally to axis B, have a length parallel to axis B and are curved about axis B; and
- a pair of appendices 25, which protrude from edge 21 of main portion 19 towards axis A.

Stationary structure 11 comprises a pair of tubular elements 26 coaxial to axis C and fixed to respective sliders 13.

In particular, each tubular element 26 has an end 27 arranged on the side of axis A and fixed to respective slider 13.

Each tubular element 26 surrounds a part of fork 6.

Connecting means 20 comprise:
- a pair of first connecting groups 30 for adjustably connecting wings 24 of fender 15 to respective tubular elements 26; and
- a pair of second connecting groups 31 for adjustably connecting appendices 25 of fender 15 to respective fork 6.

In particular, second connecting groups 31 adjustably connect appendices 25 of fender 15 to respective walls 32 laterally protruding from sliders 13. In the embodiment shown, walls 32 lie on relative planes parallel to axis A.

First and second connecting groups 30, 31 are arranged on respective lateral sides of front wheel 3.

With special reference to Figures 3 and 4, each first connecting group 30 comprises:
- a pair of screws 35 having relative axes D orthogonal to axes A, C;
- a pair of slots 36 elongated along axis B and defined by corresponding bushes 37 carried by a relative wing 24; and
- a threaded ring 38 connected to relative tubular element 26.

As evident from Figure 4, tubular elements 26 comprise relative holes 39 adjacent to slots 36 and to threaded ring 38.

Each screw 35 comprises:
- a head 40; and
- a threaded stem 41, which passes through slots 36 and holes 39, and is screwed to ring 38.

When stem 41 of each screw 35 is screwed to relative ring 38, head 40 is forced against relative bush 37 parallel to relative axis D. The resulting friction blocks fender 15 in a given configuration with respect to tire 10.

Each slot 36 comprises (Figure 3), in turn, :
- a top curved edge 47 arranged on the opposite side of tire 10; and
- a bottom curved edge 48 arranged on the side of tire 10.

Finally, each first connecting group 30 comprises a spacer 45 (Figure 4), which is sandwiched parallel to axis D between relative tubular element 26 on one side and relative wing 24 and relative bush 37 on the opposite side.

With reference to Figure 4, when connecting means 20 are in the first configuration and distance d assumes the minimum value, stems 41 abuts against bottom edges 48 of relative slots 36. In this condition, heads 40 are forced against portion 42 of bushes 37 adjacent to relative bottom edges 48.

On the contrary, when connecting means 20 are in the second configuration and distance d assumes the maximum value, stems 41 abuts against top edges 47 of relative slots 36. In this condition, heads 40 are forced against portion 43 of bushes 37 adjacent to relative top edges 47.

Screws 35 may evidently be screwed to relative rings 38 in the intermediate positions (one of which is shown in Figure 4), provided that heads 40 are forced against bushes 37.

Axis D of screws 35, slots 36 and rings 38 are aligned along axis C.

Accordingly, each first connecting group 30 defines a pair of connecting points at which fender 15 is connected to tubular element 26. These connecting points are aligned along axis C.

As evident from the above, screws 35 are indirectly screwed to tubular elements 26.

For example, these connecting points can coincide with axes D of screws 35.

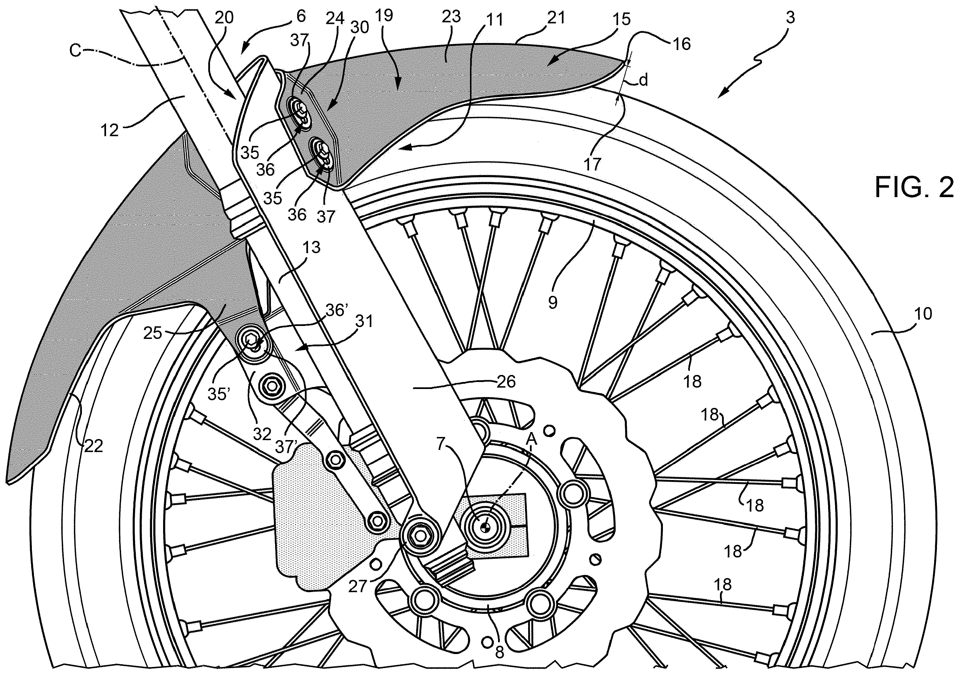

Second connecting groups 31 are similar (Figure 2) to first connecting groups 30 and will hereinafter be described only with regard to what differentiates it from the latter; the same or equivalent parts of second connecting groups 31 and first connecting groups 30 will be indicated, where possible, by the same reference numbers.

In particular, each second connecting group 31 differs from first connecting group 30 in that it comprises only one screw 35', in that slot 36' is defined by a bush 37' carried by appendix 25, and in that ring 38' is connected to wall 32 protruding from sliders 13.

As evident from the above, screws 35' are indirectly screwed to appendix 25.

In operation, the user can adjust the position of fender 15 relative to tire 10, on the basis of the desired use of motorcycle 1.

In greater detail, in case of off-road use of motorcycle 1, fender 15 is set at a higher distance d from tire 10 whereas, in case of on-road use of motorcycle 1, fender 15 is set at a smaller distance d from tire 10.

Still more precisely, in each configuration of connecting means 20 and, therefore, for each value assumed by distance d, wings 24 and appendices 25 are arranged in a corresponding position relative to tubular elements 26 and walls 32 respectively.

Screws 35, 35' pass through relative slots 36, 36' and holes 39 and are screwed to relative threaded rings 38, 38'.

Accordingly, heads 40, 40' of screws 35, 35' are forced parallel to axis D against the contour of relative bushes 37, 37' surrounding relative slots 36, 36'.

The friction between heads 40, 40' and the contour of relative bushes 37, 37' maintains fender 15 at the desired distance d from tire 10.

In case it is necessary to adjust distance d and, therefore, to move towards or away fender 15 from tire 10, screws 35, 35' are partially unscrewed from relative threaded rings 38, 38', so as to move away heads 40, 40' from relative bushes 37, 37'.

Thereafter, fender 15 is slid away or towards tire 10 up to the when the new desired position is reached.

At this stage, screws 35, 35' are completely screwed again to relative threaded rings 38, 38', so as to fix fender 15 in the new desired position.

The advantages of wheel 3 and of method of adjusting the position of fender 15 with respect to tire 10 according to the present invention will be clear from the above description.

In particular, connecting means 20 can be selectively set in a plurality of different configurations, at which distance d assume different respective values.

It is therefore possible in a very easy way to selectively adjust the value of distance d between fender 15 and tire 10.

As a result, it is possible to set motorcycle 1 either in a configuration more suitable to off-road use (i.e. with distance d assuming a higher value) or in a configuration more suitable to on-road use (i.e. with distance d assuming a smaller value).

Therefore, on one hand, when motorcycle 1 is used off-road, the risk that the mud or the sands catches in between fender 15 and tire 10 is substantially reduced, thus strongly increasingly the safety of the guide.

On the other hand, when motorcycle 1 is used on-road, fender 15 prevents spray, mud, rocks and liquid from being thrown into the air as a result of the rotation of tire 10.

Threrefore, the overall flexibility of use of motorcycle 1 is strongly increased as well as its performance both in on-road and off-road use.

Furthermore, the distance d may be easily adjusted by simply:
- partially unscrewing screws 35, 35' are from relative threaded rings 38, 38', so as to move away heads 40, 40' from relative bushes 37, 37';
- sliding fender 15 away or towards tire 10 up to the when the new desired position is reached; and
- completely screwing again screws 35, 35' to relative threaded rings 38, 38', so as to fix fender 15 in the new desired position.

Finally, it is apparent that modifications and variants not departing from the scope of protection of the claims may be made to wheel 3, 4 and method disclosed therein.

In particular, motorcycle 1 could comprise only one rear wheel 4 and two front wheels 3, or two rear wheels 4 and only one rear wheel 3.

When two rear or front wheels 3, 4 are provided, they could be mounted in such a way to lean with respect to body 2.

Wheel 3 could be a driven wheel and wheel 4 could be a driving wheel.

Finally, screws 35, 35' could be directly screwed to tubular element 25 and appendix 26.

## Claims

1. A wheel structure for a motorcycle (1), comprising:
- a rim (9) rotatable about a first axis (A) and supporting a tire (10);
- a fender (15) covering in part said tire (10) on the opposite side of said first axis (A);
- a stationary structure (11; 7, 6), which is stationary with respect to said first axis (A) and is adapted to be fixed, in use, to a body (2) of said motorcycle (1); and
- connecting means (20) for connecting said fender (15) to said stationary structure (11; 7, 6);
said connecting means (20) being selectively settable:
- either in a first configuration, at which a distance (d) between given points of said fender (15) and said tire (10) assumes a first value;
- or in a second configuration, at which said distance (d) between said given points of said fender (15) and said tire (10) assumes a second value different from said first value;
said stationary structure (11; 7, 6) comprising at least one suspension element (6) adapted to be fixed to said body (2) of said motorcycle (1);
said connecting means (20) comprising a first connecting assembly (31) selectively connecting in an adjustable way said fender (15) and said suspension element (6) ;
**characterized in that** said stationary structure (11; 7, 6) comprises:
- at least one tubular element (26); and
- said at least one suspension element (6), which is fixed to said tubular element (26);
said connecting means (20) comprising a second connecting assembly (30) selectively connecting in an adjustable way said fender (15) and said tubular element (26) ;
said second connecting assembly (30) defining at least one first and one second connecting points on said fender (15) ;
said first and second connecting points being connected to said stationary structure (11; 7, 6) in said first and second configurations respectively;
said first and second connecting points being aligned along a second axis (C) transversal to said first axis (A);
said second connecting assembly (30) comprising:
- at least one first screw (35) directly or indirectly screwed to said tubular element (26);
- at least one first slot (36) carried by said fender (15) and engaged with gap by said first screw (35);
said first slot (36) being elongated transversally to said first axis (A), so as to allow the movement of said fender (15) with respect to said tubular element (26) when said first screw (35) is partially unscrewed and still engages said first slot (36).

2. The wheel structure of claim 1, **characterized in that** said connecting means (20) can be continuously set in a plurality of intermediate configurations interposed between said first and second configuration and at which respective said distance (d) assumes respective further values ranging between said first and second value.

3. The wheel structure of claim 1 or 2, **characterized in that** said tubular element (26) surrounds a part of said suspension element (6).

4. The wheel structure of any one of the foregoing claims, **characterized by** comprising two tubular elements (25) and two respective suspension elements (6), which are arranged on respective opposite sides of said rim (9).

5. The wheel structure of any one of the foregoing claims, **characterized in that** said first connecting assembly (31) comprises:
- at least one second screw (35') directly or indirectly screwed to said suspension element (6)
- at least one second slot (36') carried by said fender and engaged with gap by said second screw;
said second slot (36') being elongated transversally to said first axis (A), so as to allow the movement of said fender (15) with respect to said suspension element (6) when said second screw (36') is at least partially unscrewed and still engage said second slot (35').

6. The wheel structure of any one of the foregoing claims, **characterized in that** said fender (15) comprises:
- a main portion (20) covering a part of said tire (10);
- at least one wing (24) projecting from said main portion (20) and superimposed to said tubular element (26); and
- at least one appendix (25) projecting from said main portion towards said first axis (A);
said second connecting assembly (30) adjustably connecting said wing (24) and said tubular element (26);
said first connecting assembly (31) adjustably connecting said appendix (25) and said suspension element (6) .

7. The wheel structure of any one of the foregoing claims, **characterized in that** said suspension element (6) and said tubular element (25) extend along said second axis (C) .

8. A motorcycle (1) comprising:
- said body (2);
- a rear wheel (3)
- at least one front wheel structure according to any one of the foregoing claims.

9. A method of adjusting the position of a fender (15) of a wheel structure for a motorcycle (1) with respect to a tire (10) of said wheel structure;
said tire (10) being rotatable about a first axis (A);
said method comprising the steps of:
i) inserting at least one screw (35, 35') with gap inside a slot (36, 36') defined by said fender (15);
ii) directly or indirectly screwing said at least one screw (35, 35') to a stationary structure (11; 7, 6), which is rotationally fixed with respect to said first axis (A), so as to arrange given points of said tire (10) and said fender (15) at a first distance (d) from one another and measured along a second axis radial (C) with respect to said first axis (A);
**characterized by** comprising the further steps of:
iii) at least partially unscrewing said at least one screw (35, 35') from said stationary structure (11; 7, 6);
iv) moving said fender (15) relative to stationary structure (11; 7, 6) parallel to said second axis (C), up to when said given points are arranged at a second distance from one another measured along said second axis (C);
v) directly or indirectly screwing again said at least one screw (35, 35') and said stationary structure (11; 7, 6) ;
vi) directly or indirectly screwing said at least one screw (35) to a tubular element (26) surrounding a suspension element (6) of said wheel structure;
said slot (36, 36') being elongated transversally to said first axis (A), so as to allow the movement of said fender (15) with respect to said tubular element (26) when said screw (35, 35') are partially unscrewed and still engage said slot (36, 36').

10. The method of claim 9, **characterized by** comprising the further step of:
vii) directly or indirectly screwing said at least one screw (35') to said suspension element (6) of said wheel structure.

## Patentansprüche

1. Radstruktur für ein Motorrad (1), mit:
- einer Felge (9), die um eine erste Achse (A) drehbar ist und einen Reifen (10) trägt;
- einem Schutzblech (15), das den Reifen (10) auf der gegenüberliegenden Seite der ersten Achse (A) teilweise abdeckt;
- einer stationären Struktur (11; 7, 6), die in Bezug auf die Achse (A) stationär ist und dafür ausgelegt ist, im Gebrauch an einer Karosserie (2) des Motorrads (1) befestigt zu sein; und
- Verbindungsmittel (20) zum Verbinden des Schutzblechs (15) mit der stationären Struktur (11; 7, 6);
wobei das Verbindungsmittel (20) selektiv einstellbar ist:
- entweder in einer ersten Konfiguration, bei der ein Abstand (d) zwischen gegebenen Punkten des Schutzblechs (15) und des Reifens (10) einen ersten Wert annimmt;
- oder in einer zweiten Konfiguration, bei welcher der Abstand (d) zwischen den gegebenen Punkten des Schutzblechs (15) und des Reifens (10) einen zweiten Wert annimmt, der sich von dem ersten Wert unterscheidet;
wobei die stationäre Struktur (11; 7, 6) zumindest ein Aufhängungselement (6) aufweist, das dafür ausgelegt ist, um an der Karosserie (2) des Motorrads (1) befestigt zu sein;
wobei das Verbindungsmittel (20) eine erste Verbindungsanordnung (31) aufweist, die das Schutzblech (15) und das Aufhängungselement (6) selektiv auf einstellbare Weise verbindet;
**dadurch gekennzeichnet, dass** die stationäre Struktur (11; 7, 6) aufweist:
- zumindest ein rohrförmiges Element (26); und
- das zumindest eine Aufhängungselement (6), das an dem rohrförmigen Element (26) befestigt ist;
wobei das Verbindungsmittel (20) eine zweite Verbindungsanordnung (30) aufweist, die das Schutzblech (15) und das rohrförmige Element (26) selektiv auf einstellbare Weise verbindet;
wobei die zweite Verbindungsanordnung (30) zumindest einen ersten und einen zweiten Verbindungspunkt an dem Schutzblech (15) definiert;
wobei der erste und der zweite Verbindungspunkt jeweils in der ersten und zweiten Konfiguration mit der stationären Struktur (11; 7, 6) verbunden sind;
wobei der erste und der zweite Verbindungspunkt entlang einer zweiten Achse (C) quer zu der ersten Achse (A) ausgerichtet sind;
wobei die zweite Verbindungsanordnung (30) aufweist:
- zumindest eine erste Schraube (35), die direkt oder indirekt mit dem rohrförmigen Element (26) verschraubt ist;
- zumindest ein erstes Langloch (36), das von dem Schutzblech (15) getragen wird und mit Spalt mittels der ersten Schraube (35) in Eingriff steht;
wobei das erste Langloch (36) quer zu der ersten Achse (A) verlängert ist, um die Bewegung des Schutzblechs (15) in Bezug auf das rohrförmige Element (26) zu ermöglichen, wenn die erste Schraube (35) teilweise herausgeschraubt ist und noch mit dem ersten Langloch (36) in Eingriff steht.

2. Radstruktur nach Anspruch 1, **dadurch gekennzeichnet, dass** das Verbindungsmittel (20) kontinuierlich in einer Mehrzahl von Zwischenkonfigurationen eingestellt werden kann, die zwischen der ersten und der zweiten Konfiguration eingefügt sind, und bei denen der jeweilige Abstand (d) jeweilige weitere Werte annimmt, die zwischen dem ersten und dem zweiten Wert liegen.

3. Radstruktur nach Anspruch 1 oder 2, **dadurch gekennzeichnet, dass** das rohrförmige Element (26) einen Teil des Aufhängungselements (6) umgibt.

4. Radstruktur nach einem der vorhergehenden Ansprüche, **dadurch gekennzeichnet, dass** sie zwei rohrförmige Elemente (25) und zwei jeweilige Aufhängungselemente (6) aufweist, die auf jeweils gegenüberliegenden Seiten der Felge (9) angeordnet sind.

5. Radstruktur nach einem der vorhergehenden Ansprüche, **dadurch gekennzeichnet, dass** die erste Verbindungsanordnung (31) aufweist:
- zumindest eine zweite Schraube (35'), die direkt oder indirekt mit dem Aufhängungselement (6) verschraubt ist;
- zumindest ein zweites Langloch (36'), das von dem Schutzblech getragen wird, und mit Spalt mittels der zweiten Schraube in Eingriff steht;
wobei das zweite Langloch (36') quer zu der ersten Achse (A) verlängert ist, um die Bewegung des Schutzblechs (15) in Bezug auf das Aufhängungselement (6) zu ermöglichen, wenn die zweite Schraube (36') zumindest teilweise herausgeschraubt ist und noch mit dem zweiten Langloch (35') in Eingriff steht.

6. Radstruktur nach einem der vorhergehenden Ansprüche, **dadurch gekennzeichnet, dass** das Schutzblech (15) aufweist:
- einen Hauptabschnitt (20), der einen Teil des Reifens (10) abdeckt;
- zumindest einen Flügel (24), der von dem Hauptabschnitt (20) vorsteht und dem rohrförmigen Element (26) überlagert ist;
und
- zumindest einen Fortsatz (25), der von dem Hauptabschnitt in Richtung zu der ersten Achse (A) vorsteht;
wobei die zweite Verbindungsanordnung (30) den Flügel (24) und das rohrförmiges Element (26) einstellbar verbindet;
wobei die erste Verbindungsanordnung (31) den Fortsatz (25) und das Aufhängungselement (6) einstellbar verbindet.

7. Radstruktur nach einem der vorhergehenden Ansprüche, **dadurch gekennzeichnet, dass** sich das Aufhängungselement (6) und das rohrförmige Element (25) entlang der zweiten Achse (C) erstrecken.

8. Motorrad (1), mit:
- der Karosserie (2);
- einem Hinterrad (3)
- zumindest einer Vorderradstruktur gemäß einem der vorhergehenden Ansprüche

9. Verfahren zum Einstellen der Position eines Schutzblechs (15) einer Radstruktur für ein Motorrad (1) in Bezug auf einen Reifen (10) der Radstruktur;
wobei der Reifen (10) um eine erste Achse (A) drehbar ist;
wobei das Verfahren die Schritte aufweist:
i) Einsetzen zumindest einer Schraube (35, 35') mit Spalt innerhalb eines Langlochs (36, 36'), das durch das Schutzblech (15) definiert ist;
ii) direktes oder indirektes Verschrauben der zumindest einen Schraube (35, 35') mit einer stationären Struktur (11; 7, 6), die in Bezug auf die erste Achse (A) drehbar befestigt ist, um gegebene Punkte des Reifens (10) und des Schutzblechs (15) in einem ersten Abstand (d) voneinander und gemessen entlang einer zweiten Achse (C) radial in Bezug auf die erste Achse (A) anzuordnen;
**gekennzeichnet durch** die weiteren Schritte:
iii) zumindest teilweises Herausschrauben der zumindest einen Schraube (35, 35') aus der stationären Struktur (11; 7, 6);
iv) Bewegen des Schutzblechs (15) relativ zu der stationären Struktur (11; 7, 6) parallel zu der zweiten Achse (C) bis die gegebenen Punkte in einem zweiten Abstand voneinander angeordnet sind, gemessen entlang der zweiten Achse (C);
v) direktes oder indirektes erneutes Verschrauben der zumindest einen Schraube (35, 35') und der stationären Struktur (11; 7, 6);
vi) direktes oder indirektes Verschrauben der zumindest einen Schraube (35) mit einem rohrförmigen Element (26), das ein Aufhängungselement (6) der Radstruktur umgibt;
wobei das Langloch (36, 36') quer zu der ersten Achse (A) verlängert ist, um die Bewegung des Schutzblechs (15) in Bezug auf das rohrförmige Element (26) zu ermöglichen, wenn die Schraube (35, 35') teilweise herausgeschraubt ist und noch mit dem Langloch (36, 36') in Eingriff steht.

10. Verfahren nach Anspruch 9, **gekennzeichnet durch** den weiteren Schritt:
vii) direktes oder indirektes Verschrauben der zumindest einen Schraube (35') mit dem Aufhängungselement (6) der Radstruktur.

## Revendications

1. Structure de roue pour une motocyclette (1), comprenant :
- une jante (9) pouvant tourner autour d'un premier axe (A) et supportant un pneu (10) ;
- un garde-boue (15) couvrant en partie ledit pneu (10) sur le côté opposé dudit premier axe (A) ;
- une structure stationnaire (11; 7, 6) qui est stationnaire par rapport audit premier axe (A) et est adaptée pour être fixée, en utilisation, à un corps (2) de ladite motocyclette (1) ; et
- des moyens de raccordement (20) pour le raccordement dudit garde-boue (15) à ladite structure stationnaire (11 ; 7, 6) ;
lesdits moyens de raccordement (20) étant réglables sélectivement :
- dans une première configuration, dans laquelle une distance (d) entre des points donnés dudit garde-boue (15) et dudit pneu (10) adopte une première valeur ;
- ou dans une seconde configuration, dans laquelle ladite distance (d) entre lesdits points donnés dudit garde-boue (15) et dudit pneu (10) adopte une seconde valeur différente de ladite première valeur ;
ladite structure stationnaire (11 ; 7, 6) comprenant au moins un élément de suspension (6) adapté pour être fixé audit corps (2) de ladite motocyclette (1) ;
lesdits moyens de raccordement (20) comprenant un premier ensemble de raccordement (31) raccordant sélectivement d'une manière ajustable ledit garde-boue (15) et ledit élément de suspension (6) ;
**caractérisée en ce que** ladite structure stationnaire (11 ; 7, 6) comprend :
- au moins un élément tubulaire (26) ; et
- ledit au moins un élément de suspension (6) qui est fixé audit élément tubulaire (26) ;
lesdits moyens de raccordement (20) comprenant un second ensemble de raccordement (30) raccordant sélectivement d'une manière ajustable ledit garde-boue (15) et ledit élément tubulaire (26) ;
ledit second ensemble de raccordement (30) définissant au moins un premier et un second point de raccordement sur ledit garde-boue (15) ;
lesdits premier et second points de raccordement étant raccordés à ladite structure stationnaire (11 ; 7, 6) dans lesdites première et seconde configurations respectivement ;
lesdits premier et second points de raccordement étant alignés le long d'un second axe (C) transversal audit premier axe (A) ;
ledit second ensemble de raccordement (30) comprenant :
- au moins une première vis (35) vissée directement ou indirectement audit élément tubulaire (26) ;
- au moins une première fente (36) portée par ledit garde-boue (15) et mise en prise avec le vide par ladite première vis (35) ;
ladite première fente (36) étant allongée transversalement audit premier axe (A) de sorte à permettre le mouvement dudit garde-boue (15) par rapport audit élément tubulaire (26) lorsque ladite première vis (35) est partiellement dévissée et met encore en prise ladite première fente (36).

2. Structure de roue selon la revendication 1, **caractérisée en ce que** lesdits moyens de raccordement (20) peuvent être réglés en continu dans une pluralité de configurations intermédiaires interposées entre lesdites première et seconde configurations et dans lesquelles ladite distance (d) respective adopte d'autres valeurs respectives s'élevant entre ladite première et seconde valeur.

3. Structure de roue selon la revendication 1 ou 2, **caractérisée en ce que** ledit élément tubulaire (26) entoure une partie dudit élément de suspension (6).

4. Structure de roue selon l'une quelconque des revendications précédentes, **caractérisée en ce qu'**elle comprend deux éléments tubulaires (25) et deux éléments de suspension (6) respectifs qui sont agencés sur des côtés opposés respectifs de ladite jante (9).

5. Structure de roue selon l'une quelconque des revendications précédentes, **caractérisée en ce que** ledit premier ensemble de raccordement (31) comprend :
- au moins une seconde vis (35') directement ou indirectement vissée audit élément de suspension (6) ;
- au moins une seconde fente (36') portée par ledit garde-boue et mise en prise avec le vide par ladite seconde vis ;
ladite seconde fente (36') étant allongée transversalement audit premier axe (A) de sorte à permettre le mouvement dudit garde-boue (15) par rapport audit élément de suspension (6) lorsque ladite seconde vis (36') est au moins partiellement dévissée et mettre encore en prise ladite seconde fente (35').

6. Structure de roue selon l'une quelconque des revendications précédentes, **caractérisée en ce que** ledit garde-boue (15) comprend :
- une portion principale (20) couvrant une partie dudit pneu (10) ;
- au moins une aile (24) faisant saillie de ladite portion principale (20) et superposée sur ledit élément tubulaire (26) ; et
- au moins un appendice (25) faisant saillie de ladite portion principale vers ledit premier axe (A) ;
ledit second ensemble de raccordement (30) raccordant de manière ajustable ladite aile (24) et ledit élément tubulaire (26) ;
ledit premier ensemble de raccordement (31) raccordant de manière ajustable ledit appendice (25) et ledit élément de suspension (6).

7. Structure de roue selon l'une quelconque des revendications précédentes, **caractérisée en ce que** ledit élément de suspension (6) et ledit élément tubulaire (25) s'étendent le long dudit second axe (C).

8. Motocyclette (1) comprenant :
- ledit corps (2) ;
- une roue arrière (3) ;
- au moins une structure de roue avant selon l'une quelconque des revendications précédentes.

9. Procédé d'ajustement de la position d'un garde-boue (15) d'une structure de roue pour une motocyclette (1) par rapport à un pneu (10) de ladite structure de roue ;
ledit pneu (10) pouvant tourner autour d'un premier axe (A) ;
ledit procédé comprenant les étapes de :
i) l'insertion au moins d'une vis (35, 35') avec le vide à l'intérieur d'une fente (36, 36') définie par ledit garde-boue (15) ;
ii) le vissage direct ou indirect de ladite au moins une vis (35, 35') à une structure stationnaire (11 ; 7, 6) qui est fixée en rotation par rapport audit premier axe (A), de sorte à agencer des points donnés dudit pneu (10) et dudit garde-boue (15) à une première distance (d) l'un de l'autre et mesurée le long d'un second axe radial (C) par rapport audit premier axe (A) ;
**caractérisé en ce qu'**il comprend les autres étapes de :
iii) le dévissage au moins partiel de ladite au moins une vis (35, 35') de ladite structure stationnaire (11 ; 7, 6) ;
iv) le déplacement dudit garde-boue (15) par rapport à la structure stationnaire (11 ; 7, 6) parallèlement audit second axe (C) jusqu'au moment où lesdits points donnés sont agencés à une seconde distance l'un de l'autre mesurée le long dudit second axe (C) ;
v) le vissage direct ou indirect de nouveau de ladite au moins une vis (35, 35') et ladite structure stationnaire (11 ; 7, 6) ;
vi) le vissage direct ou indirect de ladite au moins une vis (35) à un élément tubulaire (26) entourant un élément de suspension (6) de ladite structure de roue ;
ladite fente (36, 36') étant allongée transversalement audit premier axe (A) de sorte à permettre le mouvement dudit garde-boue (15) par rapport audit élément tubulaire (26) lorsque lesdites vis (35, 35') sont partiellement dévissées et mettent encore en prise ladite fente (36, 36').

10. Procédé selon la revendication 9, **caractérisée en ce qu'**il comprend l'autre étape de :
vii) le vissage direct ou indirect de ladite au moins une vis (35') audit élément de suspension (6) de ladite structure de roue.
